# EUROPEAN PATENT SPECIFICATION

(11) **EP 0 791 293 B1**
(45) Date of publication and mention of the grant of the patent: **18.09.2002**
(21) Application number: 97300791.7
(22) Date of filing: 07.02.1997
(51) Int. Cl.: A21C 5/00

(54) **Method and apparatus for cutting and discharging bread dough**
Verfahren und Vorrichtung zum Schneiden und zur Abgabe von Teig
Procédé et appareil pour couper et déporer la pâte

(30) Priority: 17.02.1996 JP 5408996
(43) Date of publication of application: 27.08.1997
(73) Proprietor: RHEON AUTOMATIC MACHINERY CO. LTD., Utsunomiya-shi Tochigi-ken (JP)
(72) Inventor: Morikawa, Michio, Utsunomiya-shi, Tochigi-ken (JP)
(74) Representative: Leale, Robin George

(56) References cited:
- DE-A- 2 650 290
- DE-A- 3 444 085
- FR-A- 629 482
- FR-A- 2 306 432
- GB-A- 1 204 367

## Description

This invention relates to a method and apparatus for continuously cutting and discharging constant quantities of a viscoelastic material such as bread dough, for supply to a subsequent process.

A conventional type of apparatus for cutting and discharging bread dough by a rotary cutter is exemplified in U.S. Patent No. 4,211,492, wherein bread dough in a hopper is cut by a pair of star-shaped rotary cutting blades.

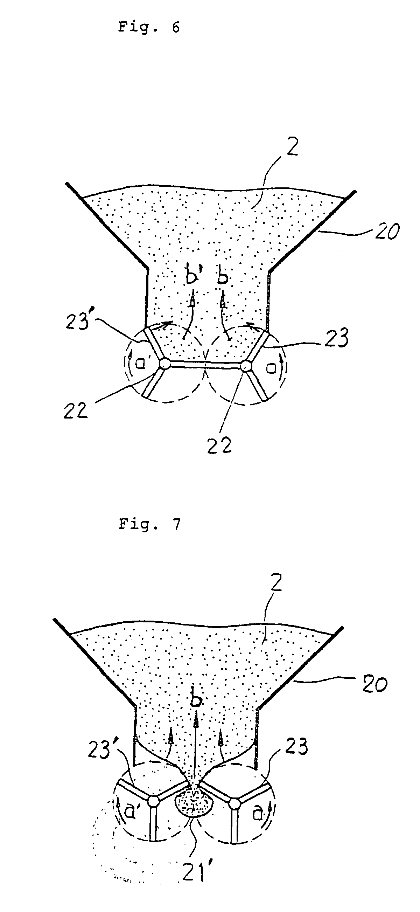

Figs. 6 and 7 show another known apparatus, in which highly viscoelastic bread dough is cut where it passes between plate-shaped rotary blades 23,23'. Since the blades push bread dough beyond their peripheries when they rotate, the amount of cut bread dough differs piece by piece, so that in practice constant amounts of cut bread dough are not produced. As a result, some irregular unfilled spaces are formed around the circumferential areas of the blades, as shown in Fig. 7.

In this apparatus action of the surfaces of the rotating blades 23,23', caused by the rotation of their shafts 22,22' in the directions of arrows a,a', causes flow of the bread dough in hopper 20 in directions b,b'. As a result, when the outer surfaces of the blades 23,23' are moving along the loci a,a' of rotation, bread dough 2 in the hopper 20 is pushed up along the directions b,b'. This causes the weight of the cut bread dough 21' to fluctuate, and furthermore the volume of bread dough which can be cut is far less than the available volume of the space defined by the rotating blades 23,23' at the bottom of the hopper.

GB-A-1204367 discloses a dough dividing machine comprising a dough feed-in hopper and a vertically downwardly extending dough dividing chamber containing a pair of rollers for guiding the dough downwards and a pair of hollow cylinders which are simultaneously turnable upwardly and then downwardly. The hollow cylinders are provided with transversely reciprocating slide cutters which move outwardly to meet each other and cut the dough into portions, push the dough downwardly out of the machine, and then retract into the cylinders before the hollow rollers pivot upwardly.

Viewed from one aspect the present invention provides a method of continuously cutting and discharging substantially constant quantities of bread dough, wherein the bread dough in a hopper is cut and discharged at a bottom opening of the hopper by means of a rotary cutter comprising pairs of opposed rotary cutting blades disposed at said bottom opening, characterized by the step of preventing the bread dough from escaping upwards, and drawing the bread dough in the hopper down during the rotation of the cutting blades, by means of forward projections on the blades, said projections projecting forwardly relative to the direction of rotation of the blades, so that substantially constant quantities of bread dough are cut and discharged by the abutment and separation of the cutting blades.

Viewed from another aspect the invention provides apparatus for continuously cutting and discharging bread dough from a hopper at a bottom opening of the hopper, by means of a rotary cutter comprising pairs of opposed rotary cutting blades disposed at said bottom opening, characterized by forward projections on the said rotary blades, said projections projecting forwardly relative to the direction of rotation of the blades, and the forward projections being arranged to draw the bread dough down from the hopper during rotation of the blades.

The said projections may for example be bar-shaped or needle-like projections provided on the front surfaces of the blades at suitable intervals. Substantially L-shaped or hoe-shaped projections extending longitudinally and tangentially of the blades are also effective.

By using such a rotary cutter, the projections on the blades can prevent the bread dough in the hopper from escaping into the upper part of the hopper, and can draw the bread dough down from the hopper so that substantially constant amounts of cut bread dough are discharged.

Some embodiments of the invention will now be described by way of example and with reference to the accompanying drawings, in which:-
Fig. 1 is a side view of a first embodiment of the invention;
Fig. 2 is a plan view of the apparatus of Fig. 1;
Figs. 3 and 4 are side views of a second embodiment of the invention;
Fig. 5 is a perspective view of part of the apparatus of the second embodiment;
Figs. 6 and 7 are side views of a prior art apparatus.

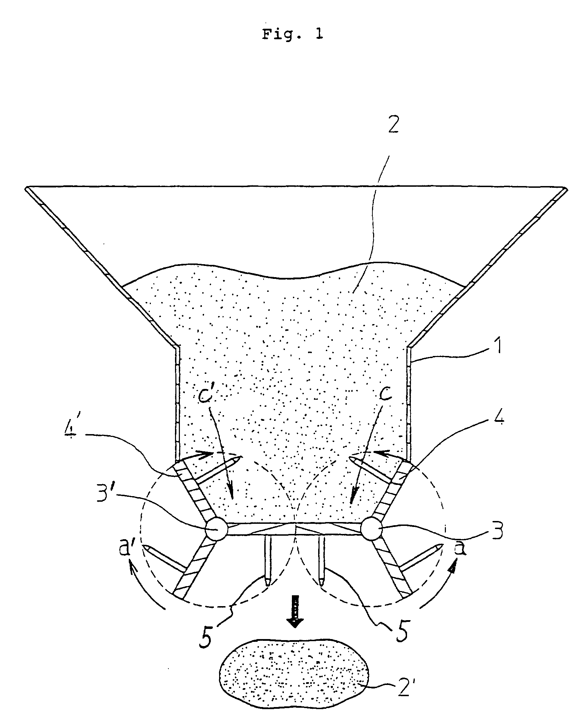

Referring first to Fig. 1, a hopper 1 contains bread dough 2, and arrows c,c' show directions of flow of the bread dough. Two oppositely rotating parallel shafts 3,3' are provided at a bottom opening of the hopper 1, with a constant distant between them.

Plate-shaped blades 4,4' of equal number are radially mounted on the peripheries of the rotating shafts 3,3' so that the peripheries of the blades contact each other as the shafts 3,3' rotate, whereby to cut the bread dough 2 and discharge cut bread dough 2' downwards.

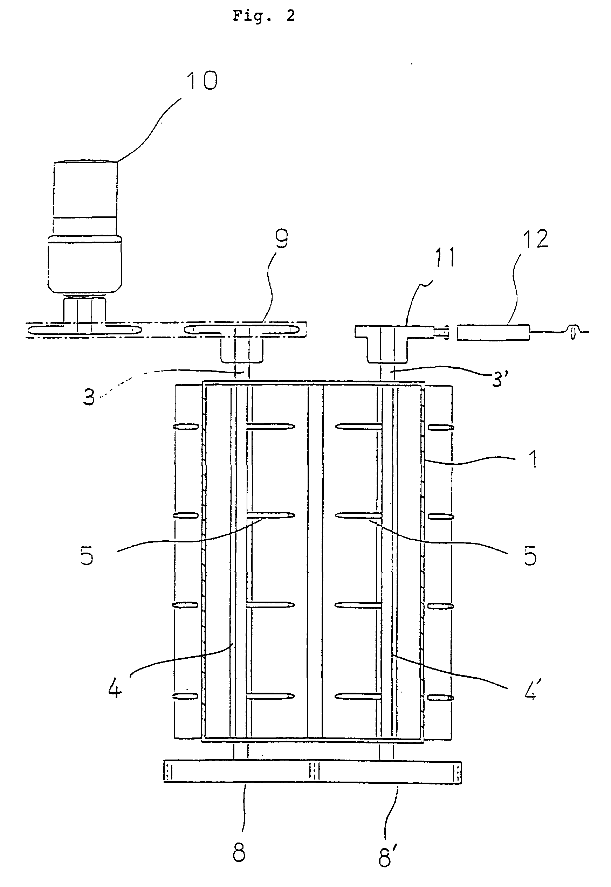

As shown in Fig. 2, a conventional arrangement of gears 8,8' and a sprocket 9 are mounted on the shafts 3,3' so to transmit rotary drive from a motor 10. A cam 11 is mounted to rotate with the shaft 3', to operate a proximity switch 12 for detecting rotation of the shaft.

The bottom opening of the hopper 1 can be closed by arranging for the blades 4 to have a rest position where they form a box-like shape closing the opening, as seen in Fig. 1, such portion being adjustable by means of the proximity switch 12 and the cam 11.

The operation of the embodiment of Figs. 1 and 2 will now be described. For every batch, kneaded and prepared bread dough 2 is transported as a unit in a mixer bowl (not shown), and manually or mechanically fed into the hopper 1.

Rotation of the blades 4,4' causes a given amount of bread dough to be cut from the bread dough in the hopper, so as to feed a cut bread dough piece 2' of constant weight into subsequent dough-forming means (not shown) beneath the apparatus.

When the blades 4,4' rotate from the position in which they close the bottom of the hopper, bar-shaped projections 5 on the blades penetrate the bread dough 2 and hold it between themselves so that it is forcibly pushed down and then cut and discharged by the movement of the blades.

The effect of the projections 5 is to substantially eliminate slipping between the blades 4,4' and the bread dough. Thus projections 5 cooperate with the front surfaces of the advancing blades 4,4' in pulling the bread dough down from its upper position to a lower position so that a constant volume of bread dough 2, defined by the closed box-like configuration of the blades, can be cut by the abutting blades 4,4'.

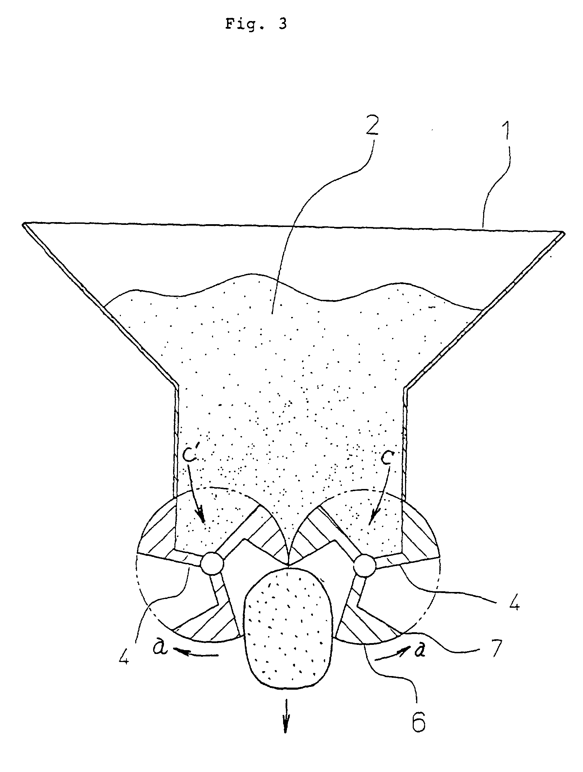

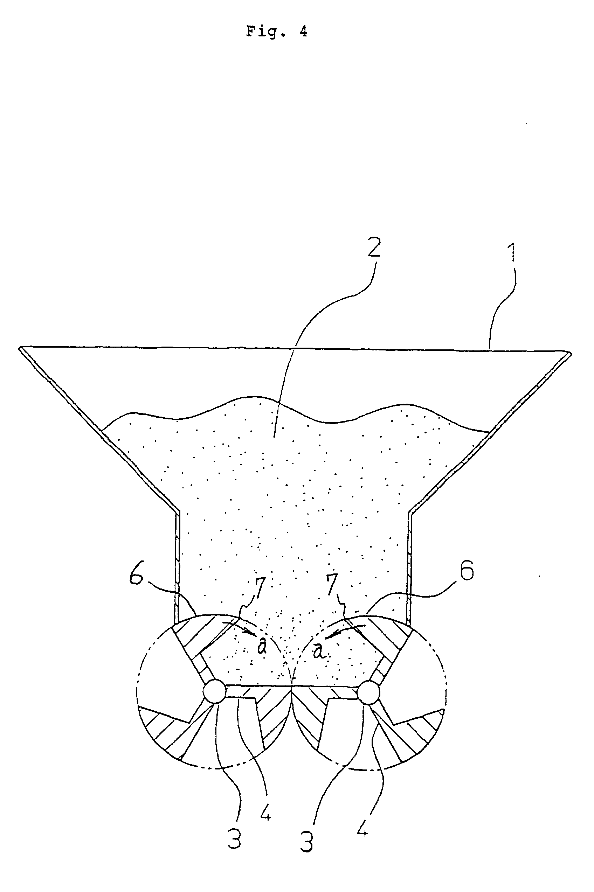

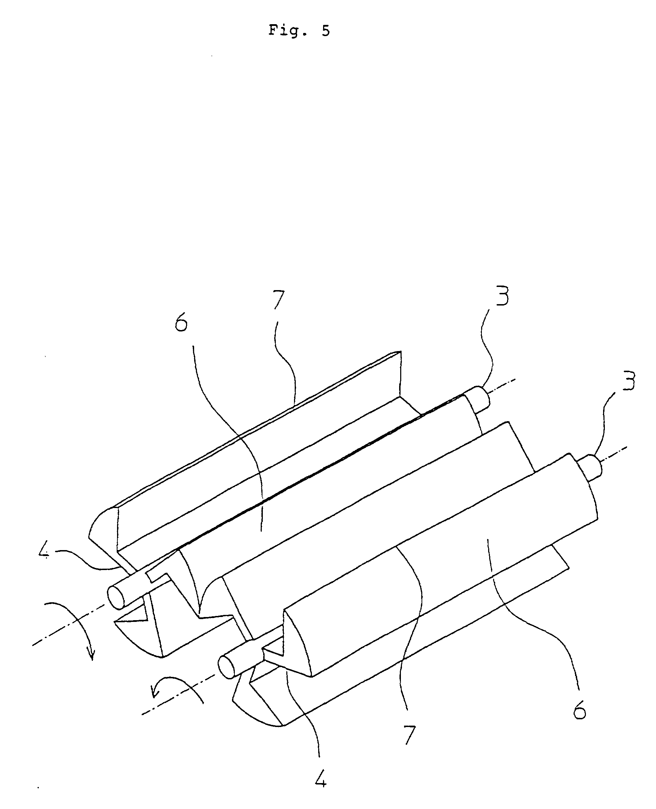

A second embodiment of the invention is illustrated in Figs. 3 to 5. Parts similar to those of the first embodiment are designated by like references.

In this embodiment the bar-shaped projections on the rotating blades 4 are replaced with elongate projections 6 which, in combination with the blades, have a hoe-like shape in transverse section. Since the hoe-shaped projections 6 are arranged in opposed relationship, when the blades 4 rotate the tips 7 of the projections 6 move in the directions of arrows "a" to hold the bread dough 2 therebetween and pull it down, so that it can be cut and discharged downwards.

As an alternative, to achieve the same effect, sheet-like projections can be provided on the blades, to form an L-shape with the blades, instead of the hoe-shaped projections.

Although in the second embodiment each of the blades 4 has one continuous projection along its length, a comb-like row of projections with tips 7 could alternatively be provided on each blade.

As mentioned above, a problem with known apparatus is that the cut bread dough does not have a constant weight. This invention, at least in its preferred forms, provides an apparatus of a simple structure that can constantly discharge cut bread dough pieces of constant weight.

As any number of projections can be mounted on the cutting blades, and as the number can be changed if necessary, the best cutting conditions can be achieved by selecting an appropriate number of projections according to the properties of the bread dough being treated.

The L-shaped or hoe-shaped projections enable the apparatus to be simplified, since they act to hold and pull down the bread dough as well as to cut it.

As the apparatus can constantly cut and discharge a constant amounts of bread dough, it makes later work easier. Thus, the apparatus can increase the yield when the cut bread dough is processed, for example to produce products such as bread dough balls which are smaller than the pieces of cut bread dough.

If the cut and discharged pieces of bread dough are joined to form a bread dough sheet of a constant thickness and width, and the sheet is then cut into given shapes to produce various kinds of products, the fluctuations in weight of the products can be reduced.

## Claims

1. A method of continuously cutting and discharging substantially constant quantities of bread dough (2'), wherein the bread dough (2) in a hopper (1) is cut and discharged at a bottom opening of the hopper by means of a rotary cutter comprising pairs of opposed rotary cutting blades (4,4') disposed at said bottom opening, **characterized by** the step of preventing the bread dough from escaping upwards, and drawing the bread dough in the hopper down during the rotation of the cutting blades, by means of forward projections (5;6) on the blades, said projections projecting forwardly relative to the direction of rotation of the blades, so that substantially constant quantities of bread dough are cut and discharged by the abutment and separation of the cutting blades.

2. Apparatus for continuously cutting and discharging bread dough from a hopper (1) at a bottom opening of the hopper, by means of a rotary cutter comprising pairs of opposed rotary cutting blades (4,4') disposed at said bottom opening, **characterized by** forward projections (5; 6) on the said rotary blades, said projections projecting forwardly relative to the direction of rotation of the blades, and the forward projections being arranged to draw the bread dough down from the hopper during rotation of the blades.

3. Apparatus as claimed in claim 2, wherein the said projections (5;6) are provided at or near the peripheries of the blades (4,4').

4. Apparatus as claimed in claim 2 or 3, wherein a plurality of said projections (5;6) are provided on each blade, spaced along its length.

5. Apparatus as claimed in claim 2, wherein the said projections, in combination with their associated blades, form substantially hoe-shaped members in transverse cross-section.

6. Apparatus as claimed in claim 2, wherein the said projections, in combination with their associated blades, form sheet-like substantially L-shaped members in transverse cross-section.

7. Apparatus as claimed in claim 5 or 6, wherein the distal surfaces of the projections are tangential to the centre of rotation of the blades.

8. Apparatus as claimed in any of claims 2 to 7, wherein each of the said projections comprises a comb-like row of projection elements.

## Patentansprüche

1. Verfahren zum kontinuierlichen Abschneiden und Ausgeben von im wesentlichen konstanten Mengen an Brotteig (2'), nach welchem der in einem Trichter (1) befindliche Brotteig (2) mittels einer rotierenden Schneideinrichtung abgeschnitten und an einer Bodenöffnung des Trichters ausgegeben wird, wobei die Schneideinrichtung Paare von einander gegenüberliegend an der Bodenöffnung angeordneten drehbaren Schneidklingen (4, 4') aufweist, **gekennzeichnet durch** den Schritt des Verhinderns, daß der Brotteig nach oben ausweicht, und des Nachuntenziehens des Brotteigs in dem Trichter während der Drehung der Schneidklingen, mittels vorwärtsweisender Vorsprünge (5; 6) an den Klingen, wobei die Vorsprünge relativ zur Klingendrehrichtung nach vorne vorspringen, so daß im wesentlichen konstante Mengen an Brotteig **durch** Aneinanderanlegen und wieder Trennen der Schneidklingen abgeschnitten und ausgegeben werden.

2. Vorrichtung zum kontinuierlichen Schneiden und Ausgeben von Brotteig aus einem Trichter an einer Bodenöffnung des Trichters mittels einer Rotationsschneideinrichtung mit einem Paar einander gegenüberliegender, sich drehender Schneidklingen (4, 4'), die an der Bodenöffnung angeordnet sind, **gekennzeichnet durch** vorwärtsweisende Vorsprünge (5; 6) an den Schneidklingen, wobei die Vorsprünge relativ zur Rotationsrichtung der Schneidblätter nach vorne vorstehen, und wobei die vorwärts gerichteten Vorsprünge derart angeordnet sind, daß sie den Brotteig während der Rotation der Klingen von dem Trichter nach unten ziehen.

3. Vorrichtung nach Anspruch 2, bei welcher die Vorsprünge (5; 6) an oder nahe der Peripherien der Klingen (4, 4') vorgesehen sind.

4. Vorrichtung nach Anspruch 2 oder 3, bei welcher eine Mehrzahl von Vorsprüngen (5; 6) in Abstand voneinander an jeder Klinge über deren Länge vorgesehen ist.

5. Vorrichtung nach Anspruch 2, bei welcher die Vorsprünge in Kombination mit ihren zugeordneten Klingen im Querschnitt im wesentlichen schuhförmige Elemente bilden.

6. Vorrichtung nach Anspruch 2, bei welcher die Vorsprünge in Kombination mit ihren zugeordneten Klingen im Querschnitt blattähnliche, im wesentlichen L-förmige Elemente bilden.

7. Vorrichtung nach Anspruch 5 oder 6, bei welcher die distalen Flächen der Vorsprünge tangential zum Rotationsmittelpunkt der Klingen verlaufen.

8. Vorrichtung nach einem der Ansprüche 2 bis 7, bei welcher jeder der Vorsprünge aus einer kammartigen Reihe von Vorsprungelementen besteht.

## Revendications

1. Procédé pour couper et décharger en continu des quantités sensiblement constantes de pâte à pain (2'), dans lequel la pâte à pain (2) se trouvant dans une trémie (1) est coupée et déchargée à une ouverture de fond de la trémie au moyen d'un couteau rotatif comportant des paires de lames coupantes rotatives opposées (4, 4') disposées à ladite ouverture de fond, **caractérisé par** l'étape consistant à empêcher la pâte à pain de s'échapper vers le haut, et à tirer la pâte à pain dans la trémie vers le bas pendant la rotation des lames coupantes, au moyen de saillies avant (5 ; 6) sur les lames, lesdites saillies faisant saillie vers l'avant par rapport au sens de rotation des lames, afin que des quantités sensiblement constantes de pâte à pain soient coupées et déchargées par l'aboutement et la séparation des lames coupantes.

2. Appareil pour couper et décharger en continu de la pâte à pain depuis une trémie (1) à une ouverture de fond de la trémie, au moyen d'un couteau rotatif comportant des paires de lames coupantes rotatives opposées (4, 4') disposées à ladite ouverture de fond, **caractérisé par** des saillies avant (5 ; 6) sur lesdites lames rotatives, lesdites saillies faisant saillie vers l'avant par rapport au sens de rotation des lames, et les saillies avant étant agencées de façon à tirer la pâte à pain vers le bas à partir de la trémie pendant la rotation des lames.

3. Appareil selon la revendication 2, dans lequel lesdites saillies (5 ; 6) sont situées aux ou à proximité des périphéries des lames (4, 4').

4. Appareil selon la revendication 2 ou 3, dans lequel une pluralité desdites saillies (5 ; 6) est prévue sur chaque lame, espacée sur sa longueur.

5. Appareil selon la revendication 2, dans lequel lesdites saillies, en combinaison avec leurs lames associées, forment des éléments sensiblement en forme de raclettes en section transversale.

6. Appareil selon la revendication 2, dans lequel lesdites saillies, en combinaison avec leurs lames associées, forment des éléments sensiblement en forme de L analogues à des feuilles en section transversale.

7. Appareil selon la revendication 5 ou 6, dans lequel les surfaces distales des saillies sont tangentes au centre de rotation des lames.

8. Appareil selon l'une quelconque des revendications 2 à 7, dans lequel chacune desdites saillies comporte une rangée analogue à un peigne d'éléments en saillie.
